# EUROPEAN PATENT SPECIFICATION

(11) **EP 2 471 897 B1**
(45) Date of publication and mention of the grant of the patent: **11.10.2017**
(21) Application number: 10820654.1
(22) Date of filing: 30.09.2010
(51) Int. Cl.: C11B 3/10, A23D 9/02, C11B 3/14

(54) **METHOD FOR REDUCING CHLOROPROPANOLS AND FORMATIVE SUBSTANCE THEREOF, GLYCIDOL FATTY ACID ESTERS, IN GLYCERIDE OILS**
VERFAHREN ZUR REDUZIERUNG VON CHLORPROPANOLEN UND DIESE FORMENDEN SUBSTANZEN, GLYDICOL-FETTSÄUREN, IN GLYCERIDÖLEN
PROCÉDÉS DE RÉDUCTION DES CHLOROPROPANOLS ET D'UNE DE LEURS SUBSTANCES FORMATIVES, L'ESTER D'ACIDE GRAS DE GLYCIDOL, CONTENUS DANS LES HUILES GLYCÉRIDIQUES

(30) Priority: 30.09.2009 JP 2009229058; 30.09.2009 JP 2009229057; 30.09.2009 JP 2009229056; 06.11.2009 JP 2009255353
(43) Date of publication of application: 04.07.2012
(73) Proprietor: Fuji Oil Company, Limited, Izumisano-shi Osaka 598-8540 (JP)
(72) Inventor: KUROSAWA, Yoko, Izumisano-shi Osaka 598-8540 (JP); OMORI, Hitomi, Izumisano-shi Osaka 598-8540 (JP); KURIYAMA, Masamitsu, Izumisano-shi Osaka 598-8540 (JP); MORITA, Akira, Izumisano-shi Osaka 598-8540 (JP); INOUE, Tomomi, Izumisano-shi Osaka 598-8540 (JP); YOKOMIZO, Futoshi, Izumisano-shi Osaka 598-8540 (JP)
(74) Representative: Gevers Patents
(86) International application number: PCT/JP2010/067110
(87) International publication number: WO 2011/040539

(56) References cited:
- WO-A1-2010/063450
- JP-A- 2003 235 447
- GERRIT VAN DUIJN: "Potential ways of reduction of 3-MCPD esters in vegetable oils", WORKSHOP ON 3-MCPD ESTERS IN FOOD PRODUCTS BRUSSELS, BELGIUM 2/5/2009 - 2/6/2009, ILSI - INTERNATIONAL LIFE SCIENCES INSTITUTE, US , 5 February 2009 (2009-02-05), pages 1-15, XP008168957, Retrieved from the Internet: URL:http://www.ilsi.org/Europe/Documents/S peaker%209%20vanDuijn.pdf [retrieved on 2015-01-26]
- B Matthäus ET AL: "Potential ways of Reduction of 3-MCPD Esters in Vegetable Oils/Data on Mitigation", , 13 March 2009 (2009-03-13), XP055164775, Retrieved from the Internet: URL:http://www.eurofedlipid.org/meetings/a rchive/graz/5872/5872_0060.pdf [retrieved on 2015-01-26]
- RÜDIGER WEISSHAAR: "3-MCPD-esters in edible fats and oils - a new and worldwide problem", EUROPEAN JOURNAL OF LIPID SCIENCE AND TECHNOLOGY, vol. 110, no. 8, 1 August 2008 (2008-08-01), pages 671-672, XP055164785, ISSN: 1438-7697, DOI: 10.1002/ejlt.200800154

## Description

### Technical Field

The present invention relates to a method for reducing chloropropanols and a formative substance thereof, glycidol fatty acid ester, in a glyceride fat or oil.

### Background Art

The "chloropropanol" is a generic name of substances in which chlorine is bound to propanol, and it has previously been known that 3-chloropropanediol which is one of them is produced as a byproduct in a small amount mainly when an amino acid liquid such as soy sauce is produced. It is also said that 3-chloropropanediol is produced due to existence of fats and sodium chloride in a process of cooking foods.

Recently, it has been revealed that 3-chloropropanediol and glycidol are present as an ester in which they are bound to a fatty acid in edible fats and oils (Non-Patent Documents 1 and 2).

Glycidol is a compound in which 1- and 2-positions of glycerol are dehydration-condensed to form an epoxide.

Further, recently, it has also been reported that, in a process of producing chloropropanols in a glyceride fat or oil, a glycidol fatty acid ester is present as a formative substance thereof (Non-Patent Document 3).

Moreover, several potential ways to reduce 3-MCPD esters in vegetable oils were discussed in Non-Patent Document 4. It concludes that 3-MCPD ester are formed mainly at the deodorization stage; the higher the deodorization temperature the higher the levels. Crude oil characteristics, e.g. diglyceride or chloride content are also an important factor, although there is no simple relationship. It further reports a number of trials that were done to reduce the 3-MCPD esters and mentions that no effect was found by treatment with active carbon (Non-Patent Document 4).

Regarding 3-chloropronediol fatty acid ester, there is no regulation such as an acceptable ingestion amount. In Europe, however, there is a tendency to evaluate on the assumption that fatty acids binding to 3-chloropropanediol fatty acid ester are entirely freed to turn into 3-chloropropanediol. Therefore, it is desirable to develop a technique for reducing the content thereof in a glyceride fat or oil.

In addition, also regarding a glycidol fatty acid ester, there is no toxicological data. However, it is desirable to develop a technique for reducing the content thereof in a glyceride fat or oil, as is the case with chloropropanols.

### Prior Art Documents

### Non-Patent Documents

Non-Patent Document 1: Zelinková Z, Svejkovská B, Velí 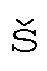 ek J, Dole 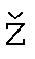 al M.: Fatty acid esters of 3-chloropropane-1,2-diol in edible oils. Food Addit Contam. 2006 Dec; 23 (12): 1290-1298
Non-Patent Document 2: Erste Einschätzung zur Berwertung der in raffinierten pflnzlichen Fetten nach gewiesenen Gehalte von Glycidol-Fettsäureestern (Stellungnahme Nr. 007/2009 des BfR vom 10. März 2009)
Non-Patent Document 3: Dr. Rüdiger Weisshaar/Fatty acid esters of 3-MCPD: Overview of occurrence in different types of foods (ILSI Europe Workshop in association with the European Commission: 5-6 February 2009 Brussels, Belgium) (http://europe.ilsi.org/NR/rdonlyres/A1D194E7-BFA2-4A23-A673-15F1905300D5/0/Speaker6Weisshaar.pdf).
Non-Patent Document 4: Gerrit Van Duijn/Potential ways of reduction of 3-MCPD esters in vegetable oils (ILSI Europe Workshop on 3-MCPD esters in food products: 5 February 2009, pages 1-15, XP008168957) (http://www.ilsi.org/Europe/ Speaker%209%20vanDuijn.pdf)

### Summary of the Invention

### Problems to be Solved by the Invention

An object of the present invention is to provide a method for reducing chloropropanols such as 3-chloropropanediol and 3-chloropropanediol fatty acid ester and a glycidol fatty acid ester in a glyceride fat or oil.

### Means for Solving the Problems

The present inventors have intensively studied. As a result, they have found that chloropropanols and a glycidol fatty acid ester in a glyceride fat or oil can be reduced by treating a glyceride fat or oil after a bleaching and deodorization step with silica gel and/or basic activated carbon wherein the pH of the basic activated carbon is 9 or higher. The present invention has been completed on the basis of these findings.

That is, the present invention provides:
(1) A method for reducing chloropropanols and a glycidol fatty acid ester thereof in a glyceride fat or oil, comprising treating a bleached and deodorized glyceride fat or oil with silica gel and/or basic activated carbon, wherein the pH of the basic activated carbon is 9 or higher,
(2) The method according to (1), wherein the basic activated carbon is hydrophobic activated carbon which has been activated at a high temperature of 500 °C or higher,(3) The method according to (1)or (2), wherein the pH of the basic activated carbon is 10 or higher,

(4) The method according to any one of (1) to (3),
wherein the bleached and deodorized glyceride fat or oil is a palm-base fat or oil,

### Effect of the Invention

According to the method of the present invention, chloropropanols such as 3-chloropropanediol and 3-chloropropanediol fatty acid ester and a glycidol fatty acid ester in a glyceride fat or oil can be reduced.

### Mode for Carrying Out the Invention

The present invention will be explained in detail below.

The present invention can also be applied to edible refined fats and oils such as soybean oil, rapeseed oil, safflower oil, corn oil, sunflower oil, cottonseed oil, rice oil, olive oil, palm oil, coconut oil, palm kernel oil, sesame oil, beef tallow, lard, and fish oil which are subjected to a refining step such as bleaching and deodorization, and can be preferably applied to a palm-base fat or oil among them.

The method of the present invention allows to reduce chloropropanols such as 3-chloropropanediol and 3-chloropropanediol fatty acid ester and a glycidol fatty acid ester in a glyceride fat or oil, by treating a glyceride fat or oil after a bleaching and deodorization step with silica gel and/or basic activated carbon. The basic activated carbon is hydrophobic activated carbon which has been activated at a high temperature of 500°C or higher. By using basic activated carbon, chloropropanols and a glycidol fatty acid ester thereof in a glyceride fat or oil can be reduced.

In the method of the present invention, the pH of basic activated carbon is 9 or higher, preferably 10 or higher. In addition, when activated carbon having stronger basicity is used, the effect of reducing chloropropanols and a glycidol fatty acid ester thereof in a glyceride fat or oil is higher. In addition, the pH of activated carbon can be measured by the method described in JIS K 1474 "Activated Carbon Test Method".

Examples of a method of silica gel treatment and/or active carbon treatment in the present invention include a method of adding 0.1 to 5% by weight of silica gel and/or active carbon to a glyceride fat or oil, and mixing and contacting for a certain period under warming at 50 to 150°C and reduced pressure.

The glyceride fat or oil obtained by the method of the present invention has been reduced in the content of chloropropanols such as 3-chloropropanediol and 3-chloropropanediol fatty acid ester and a glycidol fatty acid ester. In the present invention, the content of chloropropanols and a glycidol fatty acid ester is measured by the following method by referring to the following reference. (Determination of total 3-chloropropane-1,2-diol (3-MCPD) in edible oils by cleavage of MCPD esters with sodium methoxide. Eur. J. Lipid Sci. Technol. 2008, 110, : 183-186)

First, 0.1 g of a fat or oil is dissolved in 1 ml of t-butyl methyl ether, 250 µl of a 20 µg/ml internal standard substance (3-MCPD-d₅ ethyl acetate solution) is added, and the mixture is mixed with 1 ml of a NaOCH₃ solution (0.5 mol/l NaOCH₃ in MeOH) and allowed to stand at room temperature for 10 minutes.

Subsequently, 3 ml of hexane, 3 ml of a NaCl solution (NaCl 200 g/water 1 l), and 0.1 ml of glacial acetic acid are added and, after stirring, the upper layer is removed. Further, 3 ml of hexane is added and, after stirring, the upper layer is removed.

Then, a phenylboronic acid solution (1 g of phenylboronic acid is dissolved in 4 ml of acetone : water = 19 : 1) is added and, after stirring, the mixture is allowed to stand at 80°C for 20 minutes, and allowed to cool to room temperature. Then, 2 ml of hexane is added, the mixture is stirred, and the upper layer is subjected to GS-GM analysis. In addition, regarding GC-MS, quantitation is carried out by using a molecular ion peak m/z 196 (3-MCPD) and m/z 201 (3-MCPD-d₅).

The above-mentioned method is adopted as a method of measuring 3-chloropropanediol fatty acid ester and a glycidol fatty acid ester in Germany (Deutsche Gesellschaft fur Fettwissenschaft: DGF). In this method, 3-chloropropanediol fatty acid ester and a glycidol fatty acid ester in a glyceride fat or oil are hydrolyzed, and all of 3-chloropropanediol fatty acid ester and a glycidol fatty acid ester that are present in a glyceride fat or oil are measured as 3-MCPD.
"With this method, other compounds forming 3-MCPD under the conditions of analysis are also detected. The most important 3-MCPD esters forming compounds is glycidol (oxirane-2-methanol)."
(Ester-bound 3-chloropropane-1,2-diol (3-MCPD esters) and 3-MCPD forming substances: DGF Standard Methods Section C-Fats/C-III 18(09)).

The glyceride fat or oil obtained by the method of the present invention has been reduced in the content of a glycidol fatty acid ester. In the present invention, the content of a glycidol fatty acid ester is measured by the following method.

First, 0.15 g of a fat or oil is dissolved in 1.5 ml of acetonitrile containing 1% acetic acid and, after mixing, centrifugation is carried out. Subsequently, 1 ml of the supernatant is fractionated, and the solvent is removed. Subsequently, the fat or oil is dissolved in 1 ml of a mixed solution of acetonitrile : 5 mM ammonium acetate = 4 : 1. Further, after filtration with a 0.45 µ filter, the solution is subjected to LC/MS/MS analysis.

In addition, regarding LC/MS/MS, quantitation is carried out in a positive ion mode using a precursor ion m/z 358, a product ion m/z 341 (glycidol stearic acid ester), a precursor ion m/z 356, a product ion m/z 339 (glycidol oleic acid ester), a precursor ion m/z 330, and a product ion m/z 313 (glycidol palmitic acid ester). The detection limit is 0.5 ppm.

In the following, examples will be shown and the present invention will be further specifically explained. In the Examples, % means a weight basis.

### (Comparative Example 1)

To a refined palm oil (iodine value: 53) was added 2% by weight of white clay, the mixture was bleached at 110°C and 20 Torr for 10 minutes and, subsequently, a deodorization treatment was carried out at 250°C and 2 Torr for 90 minutes.

The content of chloropropanols and a formative substance thereof in the resulting refined palm oil was 6.5 ppm.

### Example 1

To the refined palm oil obtained in Comparative Example 1 was added 3% by weight of silica gel, and the mixture was stirred at 110°C and 20 Torr for 10 minutes to be treated with an adsorbent.

The content of chloropropanols and a formative substance thereof in the refined palm oil after the adsorbent treatment was 4.8 ppm.

### Example 2

To the refined palm oil obtained in Comparative Example 1 was added 3% by weight of coconut shell activated carbon (pH 9.7), and the mixture was stirred at 110°C and 20 Torr for 10 minutes to be treated with an activated carbon.

The content of chloropropanols and a formative substance thereof in the refined palm oil after the activated carbon treatment was 4.7 ppm.

### Example 3

To the refined palm oil obtained in Comparative Example 1 was added 3% by weight of powdery activated carbon (pH 10.6), and the mixture was stirred at 110°C and 20 Torr for 10 minutes to be treated with an activated carbon.

The content of chloropropanols and a formative substance thereof in the refined palm oil after the activated carbon treatment was 4.5 ppm.

### (Comparative Example 2)

To the refined palm oil obtained in Comparative Example 1 was added 3% by weight of phosphoric acid-activated carbon (pH 3.4), and the mixture was stirred at 110°C and 20 Torr for 10 minutes to be treated with an activated carbon.

The content of chloropropanols and a formative substance thereof in the refined palm oil after the activated carbon treatment was 7.4 ppm.

## Claims

1. A method for reducing chloropropanols and a glycidol fatty acid ester thereof in a glyceride fat or oil, comprising treating a bleached and deodorized glyceride fat or oil with silica gel and/or basic activated carbon, wherein the pH of the basic activated carbon is 9 or higher.

2. The method according to claim 1 wherein the basic activated carbon is hydrophobic activated carbon which has been activated at a temperature of 500°C or higher.

3. The method according to claim 1 or 2, wherein the pH of the basic activated carbon is 10 or higher.

4. The method according to any one of claims 1 to 3, wherein the bleached and deodorized glyceride fat or oil is a palm-base fat or oil.

## Patentansprüche

1. Ein Verfahren zur Reduzierung von Chlorpropanolen und einem Glycidol-Fettsäureester davon in einem Glyceridfett oder -öl, welches die Behandlung eines gebleichten und deodorisierten Glyceridfettes oder -öls mit Silicagel und/oder basischer Aktivkohle umfasst, wobei der pH-Wert der basischen Aktivkohle 9 oder mehr beträgt.

2. Das Verfahren nach Anspruch 1, wobei die basische Aktivkohle hydrophobe Aktivkohle ist, die bei einer Temperatur von 500 °C oder mehr aktiviert wurde.

3. Das Verfahren nach Anspruch 1 oder 2, wobei der pH-Wert der basischen Aktivkohle 10 oder mehr beträgt.

4. Das Verfahren nach irgendeinem der Ansprüche 1 bis 3, wobei das gebleichte und deodorisierte Glyceridfett oder -öl ein Fett oder Öl auf Palmbasis ist.

## Revendications

1. Procédé pour réduire des chloropropanols et un ester d'acide gras de glycidol de celui-ci dans une graisse ou huile glycéride, comprenant le traitement d'une graisse ou huile glycéride blanchie et désodorisée avec un gel de silice et/ou du charbon actif basique, dans lequel le pH du charbon actif basique est supérieur ou égal à 9.

2. Procédé selon la revendication 1, dans lequel le charbon actif basique est un charbon actif hydrophobe ayant été activé à une température supérieure ou égale à 500 °C.

3. Procédé selon la revendication 1 ou 2, dans lequel le pH du charbon actif basique est supérieur ou égal à 10.

4. Procédé selon l'une quelconque des revendications 1 à 3, dans lequel la graisse ou huile blanchie et désodorisée est une graisse ou huile à base de palme.
